(19) Europäisches Patentamt
European Patent Office
Office européen des brevets

(11) **EP 3 215 381 B1**

(12) **FASCICULE DE BREVET EUROPEEN**

(45) Date de publication et mention de la délivrance du brevet:
**29.04.2020 Bulletin 2020/18**

(21) Numéro de dépôt: **15804884.3**

(22) Date de dépôt: **05.11.2015**

(51) Int Cl.:
*H02K 7/00* *(2006.01)*     *B60K 6/365* *(2007.10)*
*B60K 6/40* *(2007.10)*     *B60K 6/48* *(2007.10)*
*B60K 6/485* *(2007.10)*

(86) Numéro de dépôt international:
**PCT/FR2015/052997**

(87) Numéro de publication internationale:
**WO 2016/071644 (12.05.2016 Gazette 2016/19)**

(54) **SYSTÈME D'ENTRAÎNEMENT D'UN VÉHICULE HYBRIDE**

ANTRIEBSSYSTEM FÜR HYBRIDFAHRZEUG

HYBRID VEHICLE DRIVE SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.11.2014 FR 1460712**

(43) Date de publication de la demande:
**13.09.2017 Bulletin 2017/37**

(73) Titulaire: **Valeo Systèmes de Contrôle Moteur**
**95800 Cergy Saint Christophe (FR)**

(72) Inventeurs:
• **ANGELOT, Pierre-Julian**
**95800 Cergy Saint Christophe (FR)**

• **COFFIN, Benoît**
**95800 Cergy Saint Christophe (FR)**

(74) Mandataire: **Garcia, Christine**
**Propriété Intellectuelle**
**Valeo Systèmes de Contrôle Moteur**
**14, avenue des Béguines**
**95800 Cergy St Christophe (FR)**

(56) Documents cités:
**EP-A2- 1 275 547**     **EP-A2- 1 342 603**
**WO-A1-2005/073005**     **WO-A1-2012/084330**
**DE-A1-102010 041 916**     **FR-A1- 2 782 958**
**US-A1- 2001 022 245**     **US-A1- 2010 113 202**

**Description**

La présente invention concerne les systèmes d'entraînement de véhicules hybrides.

Un véhicule hybride comporte usuellement une machine thermique et un moteur électrique.

Différentes architectures hybrides existent, à savoir série, parallèle et combinée série/parallèle.

Dans l'architecture série, la propulsion est intégralement assurée par le moteur électrique. Ce système est appelé série car tous les éléments de la chaîne de traction sont disposés en série, c'est-à-dire les uns à la suite des autres. Le moteur thermique, par le biais d'une génératrice, et/ou la batterie fournissent la puissance nécessaire au moteur électrique, dont le couple est transmis directement aux roues.

Un système d'entraînement pour véhicule hybride comportant un moteur thermique une machine électrique et un arbre primaire est connu de WO 2012/084330 A1.

L'inconvénient principal de cette architecture est la perte d'énergie dans la chaîne de transmission. En effet, la puissance mécanique du moteur thermique doit être transformée tout d'abord en puissance électrique pour alimenter le moteur, pour être ensuite convertie en puissance mécanique transmise aux roues.

Dans l'architecture parallèle, le couple fourni aux roues provient à la fois du moteur thermique ainsi que du moteur électrique. La recharge batterie ne peut s'effectuer que lorsque la machine électrique est en mode génératrice au détriment de la fourniture de couple.

L'avantage de cette architecture par rapport à l'architecture série est que la perte d'énergie dans la chaîne de transmission est moindre.

L'architecture hybride série/parallèle permet de bénéficier des avantages de ces deux systèmes. Deux machines électriques et un moteur thermique sont utilisés.

Le moteur thermique peut, suivant les modes de fonctionnement, fournir sa puissance mécanique aux roues directement et/ou entraîner une génératrice pour fournir la puissance électrique nécessaire à la seconde machine électrique. Cette dernière fournit à son tour une puissance mécanique aux roues. La puissance requise par cette machine électrique peut provenir de la batterie et/ou de la génératrice entraînée par le moteur à combustion.

Récemment, a été développée une nouvelle architecture dite hybride P2, comportant un seul moteur électrique et un embrayage permettant de découpler le moteur électrique du moteur thermique dans certaines situations.

La principale contrainte de l'architecture P2 est l'encombrement axial du système.

L'embrayage précité est placé entre la machine électrique et le moteur thermique, ce qui augmente la longueur totale du système. Afin de remédier à cette augmentation de longueur, il est possible de placer l'embrayage au centre de la machine électrique.

Toutefois, dans le cas d'un embrayage logé au centre de la machine électrique, le diamètre disponible réduit la surface de friction et donc le couple transmissible par l'embrayage. Pour une application nécessitant un fort couple transmissible via l'embrayage, une solution multidisque est nécessaire pour augmenter la surface de friction disponible, mais cela rend le système plus complexe et plus cher.

La présente invention vise à remédier à tout ou partie des inconvénients cidessus et à perfectionner encore les systèmes d'entraînement des véhicules hybrides.

Elle y parvient grâce à un système d'entraînement pour véhicule hybride défini par la revendication 1.

L'invention permet d'éviter l'emploi d'un embrayage placé entre la machine électrique et le moteur thermique comme dans les architectures hybrides P2, et de gagner en encombrement axial.

La machine électrique peut être logée au moins partiellement à l'intérieur du train épicycloïdal. En variante, ce dernier peut être logé au moins partiellement dans la machine électrique. On réduit ainsi l'encombrement axial du système sans recourir à un embrayage multidisque.

La machine électrique peut être à rotor externe et le rotor peut définir le planétaire du train épicycloïdal. En variante, la machine électrique peut être à rotor interne le rotor peut définir la couronne du train épicycloïdal.

Le train épicycloïdal peut comporter une couronne reliée à l'arbre primaire, un planétaire relié à la machine électrique et un porte-satellites relié au moteur thermique.

En variante, le train épicycloïdal comporte une couronne reliée à la machine électrique, un planétaire relié à l'arbre primaire et un porte-satellites relié au moteur thermique.

En variante, le train épicycloïdal comporte une couronne reliée à la machine électrique, un planétaire relié au moteur thermique et un porte-satellites relié à l'arbre primaire.

En variante, le train épicycloïdal comporte une couronne reliée à l'arbre primaire, un planétaire relié au moteur thermique et un porte-satellites relié à la machine électrique.

En variante, le train épicycloïdal comporte une courrone reliée au moteur thermique, un planétaire relié à l'arbre primaire et un porte-satellites relié à la machine électrique.

En variante, le train épicycloïdal comporte une couronne reliée au moteur thermique, un planétaire relié à la machine électrique et un porte-satellites relia à l'arbre primaire.

La machine électrique est de préférence située entre l'arbre primaire et le moteur thermique.

La machine électrique est de préférence un moteur quatre quadrants pouvant fonctionner en génératrice.

L'invention a encore pour objet un véhicule automobile équipé d'un système d'entraînement selon l'invention.

L'invention a encore pour objet un procédé de gestion du fonctionnement d'un système d'entraînement selon l'invention, dans lequel on agit sur la vitesse de la machine électrique pour modifier la répartition de puissance transmise à l'arbre primaire entre le moteur thermique et la machine électrique.

L'invention pourra être mieux comprise à la lecture de la description détaillée qui va suivre, d'exemples de mise en œuvre non limitatifs de celle-ci, et à l'examen du dessin annexé, sur lequel :

- la figure 1 représente de façon schématique une architecture de système d'entraînement,
- les figures 2 à 7 sont des exemples de configurations possibles,
- la figure 8 représente la répartition des flux de puissance mécanique et la localisation des modes de fonctionnement en fonction du ratio de transmission et spécifie les positions des différents paramètres du système,
- la figure 9 représente la répartition des flux de puissance mécanique et la localisation des modes de fonctionnement en fonction du ratio de transmission,
- la figure 10 représente une variante d'architecture de système d'entraînement à systèmes de couplage et blocage selon l'invention, et
- les figures 11 et 12 représentent deux exemples d'intégration du train épicycloïdal à la machine électrique.

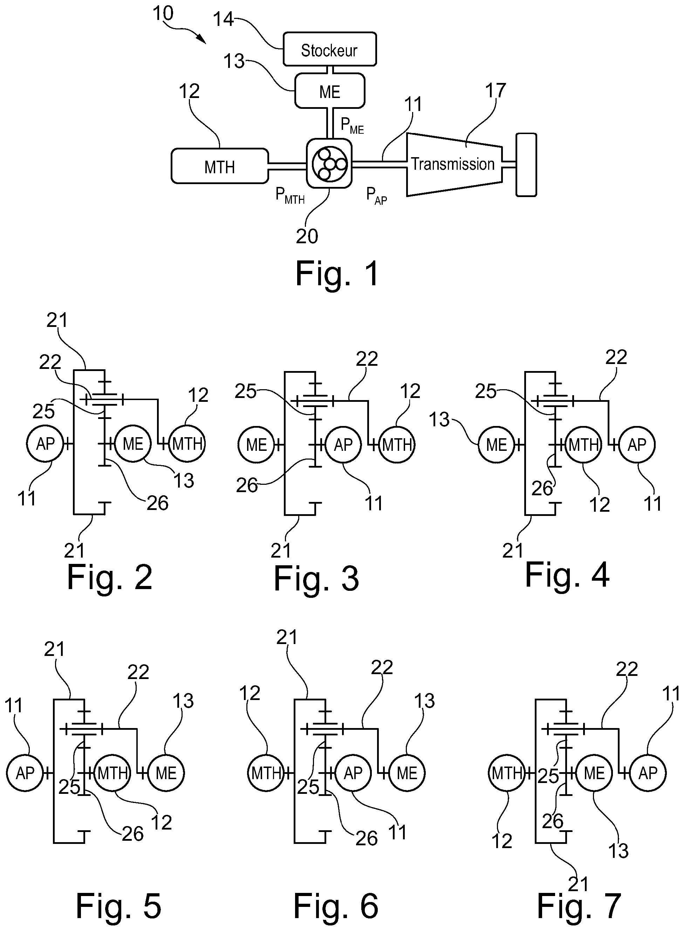

On a représenté à la figure 1 un système d'entraînement 10. Ce système d'entraînement 10 comporte un arbre primaire de transmission 11 relié aux roues du véhicule via une transmission classique 17, un moteur thermique 12, et une machine électrique 13 constituée de préférence d'un moteur réversible quatre quadrants alimenté par un stockeur d'énergie 14 tel qu'une batterie par exemple.

Conformément à l'invention, l'arbre primaire 11, la machine électrique 13 et le moteur thermique 12 sont reliés entre eux par un train épicycloïdal 20 qui permet des échanges de flux de puissance mécanique entre eux.

Le train épicycloïdal 20 comporte, dans les exemples considérés, une couronne 21, un porte-satellites 22 dont les satellites 25 engrènent sur la couronne 21 et un planétaire 26 qui engrène avec les satellites 25.

Chaque élément du train épicycloïdal 20 peut se comporter comme une entrée qui reçoit de la puissance mécanique ou comme une sortie qui en délivre. On qualifiera ainsi chacune des connexions mécaniques du train 20 aux autres éléments 11, 12, 13 du système d'entraînement d'entrée/sortie.

Différentes configurations de connexion des éléments 11, 12, 13 du système d'entraînement aux entrées/sorties du train 20 sont possibles, et sont illustrées sur les figures 2 à 7.

Dans la configuration de la figure 2, la couronne 21 est reliée à l'arbre primaire 11, le planétaire 26 à la machine électrique 13 et le porte-satellites 22 au moteur thermique 12.

Dans la configuration de la figure 3, la couronne 21 est reliée à la machine électrique 13, le porte-satellites 22 au moteur thermique 12 et le planétaire 26 à l'arbre primaire 11.

Dans la configuration de la figure 4, la couronne 21 est reliée à la machine électrique 13, le planétaire 26 au moteur thermique 12 et le porte-satellites 22 à l'arbre primaire 11.

Dans la configuration de la figure 5, la couronne 21 est reliée à l'arbre primaire 11, le moteur thermique 12 au planétaire 26 et la machine électrique 13 au porte-satellites 22.

Dans la configuration de la figure 6, le moteur thermique 12 est relié à la couronne 21, la machine électrique 13 au porte-satellites 22 et l'arbre primaire 11 au planétaire intérieur 26.

Dans la configuration de la figure 7, la couronne 21 est reliée au moteur thermique 12, le planétaire 26 à la machine électrique 13 et l'arbre primaire 11 au porte-satellites 22.

Le premier exemple de connexion, à savoir celui de la figure 2, est développé ci-après en termes énergétiques et de modes de fonctionnement.

Du fait de la relation de vitesse des différents éléments du train épicycloïdal 20, il est possible de relier les flux de puissances mécaniques des différentes entrées/sorties entre eux.

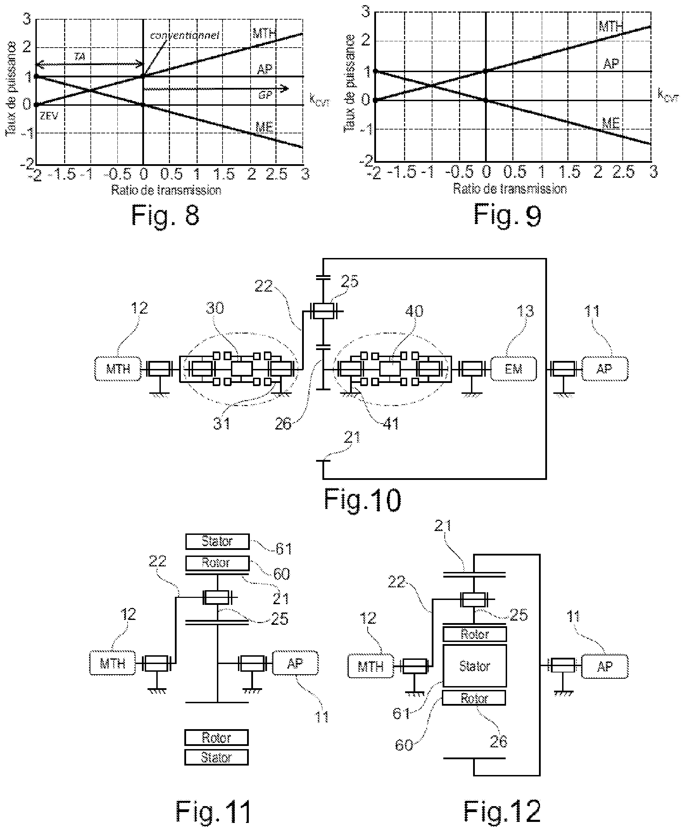

La vitesse du véhicule impose, via le rapport de démultiplication de la transmission 17, la vitesse de rotation de l'arbre primaire 11 (encore désigné par l'abréviation AP dans les formules ci-dessous) et sur le graphe de la figure 9.

Le moteur thermique 12 (encore désigné par l'abréviation MTH dans les formules ci-dessous) est un élément contrôlé en couple et par conséquent la machine électrique 13 (encore désignée par l'abréviation ME dans les formules ci-dessous) impose la deuxième vitesse du train 20 et donc les flux de puissance. Ceci amène à définir le rapport d'ouverture du train épicycloïdal ($k_{CVT}$):

$$k_{CVT} = \frac{\omega_{ME}}{\omega_{AP}}$$

où $\omega_{ME}$ est la vitesse de rotation de l'arbre de la machine électrique et $\omega_{AP}$ celle de l'arbre primaire.

Le train 20 étant défini par sa raison λ, cela amène à considérer deux grandeurs:

- le taux de puissance provenant de la machine électrique 13 :

$$\sigma_{EM} = \frac{P_{ME}}{P_{AP}} = \frac{1}{\lambda}\,k_{CVT}$$

- le taux de puissance provenant du moteur thermique 12, son complément:

$$\sigma_{MTH} = \frac{P_{MTH}}{P_{AP}} = 1 - \frac{1}{\lambda}\,k_{CVT}$$

Sur la figure 8, on a supposé que la machine électrique 13 est un moteur électrique quatre quadrants qui peut fonctionner en génératrice.

Plusieurs modes de fonctionnement sont possibles, à savoir "conventionnel", c'est-à-dire seul le moteur thermique est en action, "zéro émission", à savoir seul le moteur électrique est en action, "boost", à savoir à la fois le moteur thermique et le moteur électrique transmettent de la puissance mécanique aux roues, "régénération", à savoir le moteur électrique fonctionne en génératrice, le moteur thermique étant inactif, et "génération de puissance", où le moteur thermique fournit de la puissance au moteur électrique pour que celui-ci recharge le stockeur d'énergie.

On voit sur la figure 9 que pour une raison du train épicycloïdal égale à -2 et pour un taux de puissance fourni à l'arbre primaire 11 constant, la machine électrique 13 peut devenir génératrice pour recharger le stockeur d'énergie 14. Le rapport d'ouverture du train épicycloïdal 20 peut également être contrôlé via la machine électrique, les flux de puissance variant linéairement en fonction du rapport d'ouverture du train épicycloïdal.

Le mode "génération de puissance" ou de production de puissance électrique a lieu pour un rapport d'ouverture positif. Pour un ratio compris entre -2 et 0, on est en mode d'assistance de couple. Selon les modes de fonctionnement, certains éléments du train 20 sont avantageusement bloqués en rotation.

En particulier, dans le mode de fonctionnement en traction électrique seule, le moteur thermique est avantageusement découplé du train 20 et sa connexion bloquée, ce que permet la configuration illustrée à la figure 10. Le moteur pourra dans cette situation de vie être éteint ou être maintenu dans un état prédéfini.

L'exemple de cette figure correspond à une variante de la configuration de la figure 2, dans laquelle l'arbre primaire 11 est relié de façon permanente à la couronne 21.

Un premier système de couplage 30 permet de relier sélectivement le porte-satellites 22 soit au moteur thermique 12, soit à un bâti 31 permettant de le bloquer en rotation.

De même, un deuxième système de couplage 40 permet de relier sélectivement le planétaire intérieur 26 soit à la machine électrique 13, soit à un bâti 41 permettant de le bloquer en rotation.

Quand le premier système de couplage 30 bloque en rotation le porte-satellites 22, la machine électrique 13 est reliée au planétaire 26 grâce au deuxième système de couplage 40.Si l'on bloque le planétaire 26, il s'agit d'un mode « tout thermique » sans production électrique - sauf machine annexe placée quelque part sur la chaîne de traction.

Ce mode peut permettre de minimiser l'inertie du moteur durant les phases transitoires (inertie de la machine est nulle).

Les systèmes de couplage sont commandés par un circuit électrique qui assure la gestion du fonctionnement du système d'entraînement.

De façon à gagner en compacité, le train épicycloïdal 20 est avantageusement logé dans la machine électrique 13, ou inversement. Cette dernière peut être à rotor 60 intérieur et stator 61 extérieur, comme illustré sur la figure 11, ou à rotor 60 extérieur et stator intérieur 61, comme illustré sur la figure 12.

Dans l'exemple de la figure 11, la couronne 21 est coaxial à l'axe de rotation et rendu solidaire en rotation du rotor 60, ce dernier comportant par exemple un arbre creux dont la surface extérieure porte des aimants permanents et/ou des tôles et/ou des bobinages et la surface intérieure des dents sur lesquelles engrènent les satellites 25 ou une couronne sur laquelle sont réalisées ces dents.

Dans l'exemple de la figure 12, le rotor 60 est extérieur, et par exemple réalisé avec un arbre creux qui loge intérieurement des aimants permanents et/ou des tôles magnétiques et/ou des bobinages du rotor. L'arbre creux peut être réalisé avec des dents sur sa surface extérieure, sur lesquelles engrènent les satellites 25, ou porte une couronne sur laquelle sont réalisées ces dents.

L'invention n'est pas limitée aux exemples illustrés.

Par exemple, les particularités de réalisation décrites en références aux figures 10 à 12 peuvent s'appliquer à l'une quelconque des configurations des figures 3 à 7.

Les premier et deuxième systèmes de couplage restent respectivement associés au moteur thermique et à la machine électrique.

La variante de la figure 10 permet ainsi un gain en encombrement, en poids, en coûts, en transitoires car la gestion en continue est plus douce et un gain de consommation par l'absence de perte de synchronisation.

La machine électrique 13 peut être un moteur électrique biquadrant.

L'expression "comportant un" doit se comprendre comme étant synonyme de "comprenant au moins un".

**Revendications**

1. Système d'entraînement (10) pour véhicule hybride comportant :

- un moteur thermique (12),
- une machine électrique motrice (13),
- un arbre primaire (11) par lequel la puissance mécanique est échangée avec les roues du véhicule,
- un train épicycloïdal (20) dont les entrées/sorties sont respectivement connectées au moteur thermique (12), à la machine électrique (13) et à l'arbre primaire (11), le système d'entraînement pouvant opérer selon au moins un mode de fonctionnement où le flux de puissance transmis par le moteur thermique à l'arbre primaire dépend de la vitesse de rotation de la machine électrique

**caractérisé en ce qu'**il comporte un premier moyen de couplage (30) permettant de relier sélectivement une entrée/sortie du train épicycloïdal au moteur thermique (12) ou à un bâti d'immobilisation (31) pour bloquer en rotation cette entrée/sortie et **en ce qu'**il comporte un deuxième moyen de couplage (40) permettant de relier sélectivement une autre entrée/sortie du train épicycloïdal à la machine électrique (13) ou à un bâti d'immobilisation (41) pour bloquer en rotation cette entrée/sortie.

2. Système selon la revendication 1, la machine électrique étant logée au moins partiellement à l'intérieur du train épicycloïdal (20).

3. Système selon la revendication 1, le train épicycloïdal étant logé au moins partiellement dans la machine électrique.

4. Système selon la revendication 2, la machine électrique étant à rotor (60) externe et le rotor définissant le planétaire (26) du train épicycloïdal.

5. Système selon la revendication 3, la machine électrique étant à rotor (60) interne et le rotor définissant la couronne (21) du train épicycloïdal.

6. Système selon l'une quelconque des revendications précédentes, le train épicycloïdal (20) comportant une couronne (21) reliée à l'arbre primaire (11), un planétaire (26) relié à la machine électrique (13), et un porte-satellites (22) relié au moteur thermique (12).

7. Système selon l'une quelconque des revendications 1 à 5, le train épicycloïdal comportant une couronne reliée à la machine électrique, un planétaire relié à l'arbre primaire, et un porte-satellites relié au moteur thermique.

8. Système selon l'une quelconque des revendications 1 à 5, le train épicycloïdal comportant une couronne reliée à la machine électrique, un planétaire relié au moteur thermique, et un porte-satellites relié à l'arbre primaire.

9. Système selon l'une quelconque des revendications 1 à 5, le train épicycloïdal comportant une couronne reliée à l'arbre primaire, un planétaire relié au moteur thermique, et un porte-satellites relié à la machine électrique.

10. Système selon l'une quelconque des revendications 1 à 5, le train épicycloïdal comportant une couronne reliée au moteur thermique, un planétaire relié à l'arbre primaire, et un porte-satellites relié à la machine électrique.

11. Système selon l'une quelconque des revendications 1 à 5, le train épicycloïdal comportant une couronne relié au moteur thermique, un planétaire relié à la machine électrique, et un porte-satellites relié à l'arbre primaire.

12. Système selon l'une quelconque des revendications précédentes, la machine électrique (13) étant située entre l'arbre primaire (11) et le moteur thermique (12).

13. Système selon l'une quelconque des revendications 1 à 12, la machine électrique (13) étant un moteur quatre quadrants pouvant fonctionner en génératrice.

14. Véhicule automobile équipé d'un système d'entraînement (10) tel que défini dans l'une quelconque des revendications précédentes.

15. Procédé de gestion du fonctionnement d'un système d'entrainement (10) selon l'une quelconque des revendications 1 à 13, dans lequel on agit sur la vitesse de la machine électrique (13) pour modifier la répartition des puissances mécaniques transmises à l'arbre primaire (11) entre le moteur thermique et la machine électrique.

**Patentansprüche**

1. Antriebssystem (10) für ein Hybridfahrzeug, umfassend:

   - einen Verbrennungsmotor (12),
   - eine elektrische Antriebsmaschine (13),
   - eine Primärwelle (11), durch welche die mechanische Leistung mit den Rädern des Fahrzeugs ausgetauscht wird,
   - ein Planetengetriebe (20), dessen Eingänge/Ausgänge jeweils mit dem Verbrennungsmotor (12), mit der elektrischen Maschine (13) und mit der Primärwelle (11) verbunden sind, wobei das Antriebssystem in wenigstens einer Betriebsart arbeiten kann, in welcher der vom Verbrennungsmotor auf die Primärwelle übertragene Leistungsfluss von der Drehzahl der elektrischen Maschine abhängt,

**dadurch gekennzeichnet, dass** es ein erstes Kupplungsmittel (30) umfasst, welches ermöglicht, einen Eingang/Ausgang des Planetengetriebes selektiv mit dem Verbrennungsmotor (12) oder mit einem Arretierrahmen (31) zum Sichern dieses Eingangs/Ausgangs gegen Verdrehen zu verbinden, und dadurch, dass es ein zweites Kupplungsmittel (40) umfasst, welches ermöglicht, einen anderen Eingang/Ausgang des Planetengetriebes selektiv mit der elektrischen Maschine (13) oder mit einem Arretierrahmen (41) zum Sichern dieses Eingangs/Ausgangs gegen Verdrehen zu verbinden.

2. System nach Anspruch 1, wobei die elektrische Maschine wenigstens teilweise im Inneren des Planetengetriebes (20) untergebracht ist.

3. System nach Anspruch 1, wobei das Planetengetriebes wenigstens teilweise in der elektrischen Maschine untergebracht ist.

4. System nach Anspruch 2, wobei die elektrische Maschine einen Außenrotor (60) aufweist und der Rotor das Sonnenrad (26) des Planetengetriebes definiert.

5. System nach Anspruch 3, wobei die elektrische Maschine einen Innenrotor (60) aufweist und der Rotor das Hohlrad (21) des Planetengetriebes definiert.

6. System nach einem der vorhergehenden Ansprüche, wobei das Planetengetriebe (20) ein Hohlrad (21), das mit der Primärwelle (11) verbunden ist, ein Sonnenrad (26), das mit der elektrischen Maschine (13) verbunden ist, und einen Planetenradträger (22), der mit dem Verbrennungsmotor (12) verbunden ist, umfasst.

7. System nach einem der Ansprüche 1 bis 5, wobei das Planetengetriebe ein Hohlrad, das mit der elektrischen Maschine verbunden ist, ein Sonnenrad, das mit der Primärwelle verbunden ist, und einen Planetenradträger, der mit dem Verbrennungsmotor verbunden ist, umfasst.

8. System nach einem der Ansprüche 1 bis 5, wobei das Planetengetriebe ein Hohlrad, das mit der elektrischen Maschine verbunden ist, ein Sonnenrad, das mit dem Verbrennungsmotor verbunden ist, und einen Planetenradträger, der mit der Primärwelle verbunden ist, umfasst.

9. System nach einem der Ansprüche 1 bis 5, wobei das Planetengetriebe ein Hohlrad, das mit der Primärwelle verbunden ist, ein Sonnenrad, das mit dem Verbrennungsmotor verbunden ist, und einen Planetenradträger, der mit der elektrischen Maschine verbunden ist, umfasst.

10. System nach einem der Ansprüche 1 bis 5, wobei das Planetengetriebe ein Hohlrad, das mit dem Verbrennungsmotor verbunden ist, ein Sonnenrad, das mit der Primärwelle verbunden ist, und einen Planetenradträger, der mit der elektrischen Maschine verbunden ist, umfasst.

11. System nach einem der Ansprüche 1 bis 5, wobei das Planetengetriebe ein Hohlrad, das mit dem Verbrennungsmotor verbunden ist, ein Sonnenrad, das mit der elektrischen Maschine verbunden ist, und einen Planetenradträger, der mit der Primärwelle verbunden ist, umfasst.

12. System nach einem der vorhergehenden Ansprüche, wobei sich die elektrische Maschine (13) zwischen der Primärwelle (11) und dem Verbrennungsmotor (12) befindet.

13. System nach einem der Ansprüche 1 bis 12, wobei die elektrische Maschine (13) ein Motor mit Vier-Quadranten-Betrieb ist, der im Generatorbetrieb arbeiten kann.

14. Kraftfahrzeug, welches mit einem Antriebssystem (10) ausgestattet ist, wie in einem der vorhergehenden Ansprüche definiert.

15. Verfahren zur Verwaltung des Betriebs eines Antriebssystems (10) nach einem der Ansprüche 1 bis 13, wobei die Drehzahl der elektrischen Maschine (13) beeinflusst wird, um die Aufteilung der auf die Primärwelle (11) übertragenen mechanischen Leistungen zwischen dem Verbrennungsmotor und der elektrischen Maschine zu ändern.

**Claims**

1. Drive system (10) for a hybrid vehicle comprising:

   - a heat engine (12),
   - an electric drive machine (13),
   - a primary shaft (11) via which the mechanical power is exchanged with the wheels of the vehicle,
   - an epicyclic gear set (20) whose inlets/outlets are respectively connected to the heat engine (12), to the electric machine (13) and to the primary shaft (11), the drive system being able to operate according to at least one operating mode in which the flow of power transmitted by the heat engine to the primary shaft depends on the rotational speed of the electric machine,

**characterized in that** it comprises a first coupling means (30) by which it is possible to selectively connect an inlet/outlet of the epicyclic gear set to the heat engine (12) or to an immobilizing frame (31) so as to prevent this inlet/outlet from rotating, and **in that** it comprises a second coupling means (40) by which it is possible to selectively connect another inlet/outlet of the epicyclic gear set to the electric machine (13) or to an immobilizing frame (41) so as to prevent this inlet/outlet from rotating.

2. System according to Claim 1, the electric machine being at least partially housed within the epicyclic gear set (20).

3. System according to Claim 1, the epicyclic gear set being at least partially housed in the electric machine.

4. System according to Claim 2, the electric machine having an external rotor (60) and the rotor defining the sun gear (26) of the epicyclic gear set.

5. System according to Claim 3, the electric machine having an internal rotor (60) and the rotor defining the ring gear (21) of the epicyclic gear set.

6. System according to any one of the preceding claims, the epicyclic gear set (20) comprising a ring gear (21) connected to the primary shaft (11), a sun gear (26) connected to the electric machine (13), and a planet carrier (22) connected to the heat engine (12) .

7. System according to any one of Claims 1 to 5, the epicyclic gear set comprising a ring gear connected to the electric machine, a sun gear connected to the primary shaft, and a planet carrier connected to the heat engine.

8. System according to any one of Claims 1 to 5, the epicyclic gear set comprising a ring gear connected to the electric machine, a sun gear connected to the heat engine, and a planet carrier connected to the primary shaft.

9. System according to any one of Claims 1 to 5, the epicyclic gear set comprising a ring gear connected to the primary shaft, a sun gear connected to the heat engine, and a planet carrier connected to the electric machine.

10. System according to any one of Claims 1 to 5, the epicyclic gear set comprising a ring gear connected to the heat engine, a sun gear connected to the primary shaft, and a planet carrier connected to the electric machine.

11. System according to any one of Claims 1 to 5, the epicyclic gear set comprising a ring gear connected to the heat engine, a sun gear connected to the electric machine, and a planet carrier connected to the primary shaft.

12. System according to any one of the preceding claims, the electric machine (13) being located between the primary shaft (11) and the heat engine (12).

13. System according to any one of Claims 1 to 12, the electric machine (13) being a four-quadrant motor that can operate as a generator.

14. Motor vehicle fitted with a drive system (10) as defined in any one of the preceding claims.

15. Method for managing the operation of a drive system (10) according to any one of Claims 1 to 13, in which the speed of the electric machine (13) is acted upon in order to modify the distribution of the mechanical powers transmitted to the primary shaft (11) between the heat engine and the electric machine.

Fig. 1

Fig. 2

Fig. 3

Fig. 4

Fig. 5

Fig. 6

Fig. 7

EP 3 215 381 B1

Fig. 8

Fig. 9

Fig.10

Fig. 11

Fig.12

**RÉFÉRENCES CITÉES DANS LA DESCRIPTION**

**Documents brevets cités dans la description**

- WO 2012084330 A1